# EUROPÄISCHE PATENTANMELDUNG

(11) **EP 4 411 160 A1**
(43) Veröffentlichungstag der Anmeldung: **07.08.2024**
(21) Anmeldenummer: 24150623.7
(22) Anmeldetag: 08.01.2024
(51) Int. Cl.: F16C 33/78, F16C 19/06, F16C 19/16, F16C 19/18

(54) **DICHTUNGSANORDNUNG UND DEREN VERWENDUNG**

(30) Priorität: 02.02.2023 DE 102023102555
(71) Anmelder: Carl Freudenberg KG, 69469 Weinheim (DE)
(72) Erfinder: Webelhuth, Markus, 35114 Haina-Haddenberg (DE); Kinsch, Patrick, 34590 Wabern (DE); Biesenroth, Simon, 34637 Röllshausen (DE)

(57) **Zusammenfassung**

Dichtungsanordnung, umfassend ein Wälzlager (1) mit einem Innenring (2), einem Außenring (3) und Wälzkörpern (4), die zwischen dem Innenring (2) und dem Außenring (3) angeordnet sind und eine Dichtung (5), umfassend einen Dichtring (6) aus einem Dichtungswerkstoff, mit einer dynamisch beanspruchten Dichtlippe (7) und einem statisch beanspruchten Dichtbereich (8), der eine Dichtfläche (9) auf der der Dichtlippe (7) radial abgewandten Seite aufweist, wobei sich die Dichtlippe (7) und der Dichtbereich (8) mit radialem Abstand benachbart zugeordnet sind und einen Anschlagring (10) aus einem zähharten Werkstoff, der die Dichtfläche (9) anliegend und dichtend berührt, wobei der Anschlagring (10) als Winkelring (11) mit einem Axialflansch (12) und einem Radialflansch (13) ausgebildet ist, wobei der Axialflansch (12) am Außen- (3) oder Innenring (2) festgelegt ist und auf der dem Radialflansch (13) axial abgewandten Seite eine Stirnseite (14) aufweist, die einen Axialanschlag (15) des Außen- (3) oder Innenrings (2) anliegend berührt.

## Beschreibung

### Technisches Gebiet

Die Erfindung betrifft eine Dichtungsanordnung und deren Verwendung.

### Stand der Technik

Dichtungsanordnungen sind in unterschiedlichsten Ausführungen bekannt und gelangen in vielen Bereichen zur Anwendung, zum Beispiel zur Abdichtung von Elektromotoren.

### Darstellung der Erfindung

Der Erfindung liegt die Aufgabe zu Grunde, eine Dichtungsanordnung zur Abdichtung von Wälzlagern derart weiterzuentwickeln, dass sie einfach montierbar und einfach und kostengünstig herstellbar ist und gute Gebrauchseigenschaften während einer langen Gebrauchsdauer aufweist. Insbesondere sollen dynamisch beanspruchte und statisch beanspruchte Dichtstellen in der Dichtungsanordnung vor dem Eindringen von Verunreinigungen und Feuchtigkeit geschützt werden.

Diese Aufgabe wird erfindungsgemäß durch eine Dichtungsanordnung mit den Merkmalen von Anspruch 1 und eine Verwendung gemäß Anspruch 9 gelöst. Auf vorteilhafte Ausgestaltungen der Dichtungsanordnung nehmen die auf Anspruch 1 direkt oder indirekt rückbezogenen Ansprüche Bezug.

Zur Lösung der Aufgabe ist eine Dichtungsanordnung vorgesehen, umfassend ein Wälzlager mit einem Innenring, einem Außenring und Wälzkörpern, die zwischen dem Innenring und dem Außenring angeordnet sind und eine Dichtung, umfassend einen Dichtring aus einem Dichtungswerkstoff, mit einer dynamisch beanspruchten Dichtlippe und einem statisch beanspruchten Dichtbereich, der eine Dichtfläche auf der der Dichtlippe radial abgewandten Seite aufweist, wobei sich die Dichtlippe und der Dichtbereich mit radialem Abstand benachbart zugeordnet sind und einen Anschlagring aus einem zähharten Werkstoff, der die Dichtfläche anliegend und dichtend berührt, wobei der Anschlagring als Winkelring mit einem Axialflansch und einem Radialflansch ausgebildet ist, wobei der Axialflansch am Außen- oder Innenring festgelegt ist und auf der dem Radialflansch axial abgewandten Seite eine Stirnseite aufweist, die eine Axialanschlag des Außen- oder Innenrings anliegend berührt.

Hierbei ist von Vorteil, dass die Montage der Dichtungsanordnung besonders einfach und prozesssicher durchführbar ist. Der Dichtring und der Anschlagring werden zunächst vormontiert. Anschließend wird die vormontierte Einheit in den Außen- oder Innenring des Wälzlagers so lange eingepresst, bis der Axialflansch mit seiner Stirnseite den Axialanschlag des Außen- oder Innenrings anliegend berührt.

Generell besteht die Möglichkeit, dass die Dichtlippe des Dichtrings, in radialer Richtung betrachtet, innen- oder außendichtend ausgebildet, abhängig von den jeweiligen Gegebenheiten des Anwendungsfalls.

Der Dichtring und der Anschlagring sind stets optimal im entsprechenden Ring des Wälzlagers positioniert

Die Dichtungsanordnung hat einen einfachen und teilnahmen Aufbau und ist einfach und kostengünstig herstellbar.

Gemäß einer vorteilhaften Ausgestaltung kann es vorgesehen sein, dass der Radialflansch und der Axialanschlag den Dichtbereich, im Querschnitt der Dichtungsanordnung betrachtet, klammerförmig umschließen. Der Dichtring kann sich dadurch, wenn überhaupt, nur innerhalb der klammerförmigen Umschließung in axialer Richtung bewegen. In axialer Richtung einerseits ist die Beweglichkeit des Dichtrings durch den Radialflansch des Anschlagrings, in axialer Richtung andererseits durch den Axialanschlag des entsprechenden Rings des Wälzlagers begrenzt.

Der Axialflansch kann eine radiale Dicke und der Axialanschlag eine radiale Tiefe aufweisen, wobei das Verhältnis aus radialer Tiefe und radialer Dicke bevorzugt 1,5 bis 2,5 beträgt. Hierbei ist von Vorteil, dass sich durch das genannte Verhältnis eine deutliche Überdeckung des Axialflanschs in radialer Richtung durch den Axialanschlag ergibt. Dadurch, dass die radiale Tiefe stets deutlich größer als die radiale Dicke ist, legt sich die Stirnseite des Anschlagrings stets definiert und sauber an den Axialanschlag an. Zusätzlich überdeckt der Axialanschlag den Axialflansch in radialer Richtung so deutlich, dass gegebenenfalls ein axiales Wandern des Dichtrings in axialer Richtung durch den über den Axialflansch überstehenden Axialanschlag zuverlässig und sicher begrenzt würde.

Bevorzugt bilden der Dichtring und der Winkelring eine vormontierte Einheit. Hierbei ist von Vorteil, dass sich dadurch die Montage der Dichtung im entsprechenden Ring des Wälzlagers vereinfacht. Während der Montage braucht lediglich die vormontierte Einheit mit dem entsprechenden Ring des Wälzlagers verbunden zu werden. Die Montage vieler Einzelteile und deren korrekte Positionierung relativ zueinander ist dadurch nicht erforderlich.

Der Dichtring und der Winkelring können einander ungehaftet und kraftschlüssig zugeordnet sein. Auch eine derartige Ausgestaltung trägt zur einfachen und kostengünstigen Herstellbarkeit der Dichtungsanordnung bei. Außerdem ist von Vorteil, dass im Anschluss an die bestimmungsgemäße Verwendung der Dichtungsanordnung ein sortenreines Recycling durch die ungehaftete Zuordnung von Dichtring und Winkelring begünstigt wird.

Die Wälzkörper können auf der der Dichtung axial zugewandten Seite in einer ersten gedachten Radialebene angeordnet sein und der Axialanschlag in einer zweiten gedachten Radialebene, wobei sich die Radialebenen mit einem ersten axialen Abstand benachbart zugeordnet sind. Während der bestimmungsgemäßen Verwendung der Dichtungsanordnung sind sich der Dichtring mit seiner Dichtlippe und die Wälzkörper stets mit axialem Abstand benachbart zugeordnet. Es gibt keinen unerwünschten Kontakt zwischen der Dichtung und den Wälzkörpern.

Weiter verbesserte Gebrauchseigenschaften während einer langen Gebrauchsdauer weist die Dichtungsanordnung dadurch auf, dass die Dichtung bevorzugt einen Protektorring umfasst, der am Innen- oder Außenring festgelegt ist, wobei die Dichtlippe axial in Richtung Protektorring vorgewölbt ist und wobei der Protektorring die Dichtlippe und ihre entsprechende Lauffläche am Innen- oder Außenring in radialer Richtung überdeckt. Der Protektorring schützt die dynamisch beanspruchte Dichtlippe des Dichtrings. Der Protektorring schützt insbesondere vor einer Beaufschlagung der Dichtlippe mit Schmutz oder dann, wenn die Dichtungsanordnung mittels eines Wasserstrahls von außen gereinigt wird. Durch den Schutz der Dichtlippe durch den Protektorring wird die Lebensdauer des Dichtrings selbst und dadurch auch die Lebensdauer des durch den Dichtring geschützten Wälzlagers signifikant verlängert.

Der Protektorring ist der Dichtlippe dazu bevorzugt mit einem zweiten axialen Abstand benachbart zugeordnet. Eine gegenseitige Berührung von Protektorring und Dichtlippe, die während der bestimmungsgemäßen Verwendung der Dichtungsanordnung relativ verdrehbar zueinander angeordnet sind, ist dadurch ausgeschlossen.

Außerdem betrifft die Erfindung die Verwendung der zuvor beschriebenen Dichtungsanordnung. Für manche Verwendungen sind kompakte Abmessungen einer Dichtungsanordnung von Vorteil, und der Schutz der abgedichteten Wälzlager ist besonders wichtig.

Erfindungsgemäß wird die Dichtungsanordnung in einem E-Motor verwendet, insbesondere in einem E-Motor für Fahrräder.

Besonders E-Motoren für Fahrräder sollten kompakte Abmessungen aufweisen, dadurch nur ein geringes Gewicht, kostengünstig herstellbar sein und eine lange Lebensdauer auch dann aufweisen, wenn das Fahrrad im Freien abgestellt und/ oder auch unter widrigen Verhältnissen auf staubigen oder nassen und schlammigen Straßen gefahren wird.

Dadurch, dass bei der erfindungsgemäßen Dichtungsanordnung sowohl die dynamisch beanspruchte Dichtlippe als auch der statische Dichtbereich gut vor einer Beaufschlagung mit Verunreinigungen und Feuchtigkeit geschützt sind, ist selbst die Reinigung des Fahrrads mittels eines Wasserstrahls unbedenklich. Die Dichtstellen der Dichtungsanordnung und das Wälzlager in der Dichtungsanordnung sind gut selbst vor solchen äußeren Einflüssen geschützt.

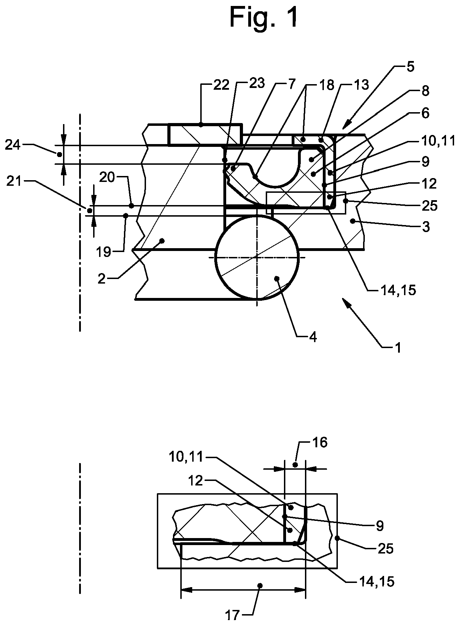

### Kurzbeschreibung der Zeichnung

Ein Ausführungsbeispiel der erfindungsgemäßen Dichtungsanordnung wird nachfolgend anhand der Figur näher erläutert.

Diese zeigt eine Dichtungsanordnung in schematischer Darstellung während einer bestimmungsgemäßen Verwendung.

### Ausführung der Erfindung

In der Figur ist eine erfindungsgemäße Dichtungsanordnung während ihrer bestimmungsgemäßen Verwendung gezeigt.

Verwendet wird die Dichtungsanordnung in einem Fahrrad-Elektromotor.

In dem gezeigten Ausführungsbeispiel ist der Dichtring radial innendichtend ausgebildet.

Der Dichtring 6 ist drehfest im Außenring 3 des Wälzlagers 1 montiert und dichtet mit seiner Dichtlippe 7 radial innen dynamisch dichtend auf der Lauffläche 23 des Innenrings 2 ab.

Die Dichtungsanordnung umfasst ein als Wälzlager 1 ausgebildetes Kugellager mit dem Innenring 2, dem Außenring 3 und Wälzkörpern 4, die als Kugeln ausgebildet sind.

Um das Wälzlager 1 vor dem Eindringen von Verunreinigungen und Feuchtigkeit zu schützen, ist die Dichtung 5 vorgesehen, die den Dichtring 6 aus einem gummielastischen Dichtungswerkstoff umfasst. Der Dichtring 6 umfasst in diesem Ausführungsbeispiel die dynamisch beanspruchte Dichtlippe 7 und den statisch beanspruchten Dichtbereich 8, wobei die Dichtlippe 7 und der Dichtbereich 8 einstückig ineinander übergehend und materialeinheitlich ausgebildet sind. Der Dichtbereich 8 weist auf der der Dichtlippe 7 radial abgewandten Seite die Dichtfläche 9 auf, mit der der Dichtbereich 8 im Anschlagring 10 angeordnet ist. Der Anschlagring 10 ist als Winkelring 11 ausgebildet. Der Anschlagring 10 besteht aus einem zähharten Werkstoff, zum Beispiel aus Blech. Der Winkelring 11 ist im Wesentlichen L-förmig ausgebildet und umfasst den Axialflansch 12 und den Radialflansch 13, wobei der Axialflansch 12 im Außenring 3 eingepresst ist. Der Außenring 3 ist mit einem Axialanschlag 15 versehen, an dem die Stirnseite 14 des Axialflanschs 12 anliegt.

Durch den Radialflansch 13 des Winkelrings 11 und den Axialanschlag 15 des Außenrings 3 ist der Einbauraum des Dichtrings 6 in axialer Richtung begrenzt. Durch den Winkelring 11 und den Axialanschlag 15 ist der Dichtbereich, wie hier gezeigt, klammerförmig umschlossen.

Die radiale Tiefe 17 des Axialanschlags 15 ist deutlich größer, als die radiale Dicke 16 des Axialflanschs 12. Im gezeigten Ausführungsbeispiel ist das Verhältnis aus der radialen Tiefe 17 und der radialen Dicke 16 etwa 2.

Der Axialanschlag 15 im Außenring 3 hat nicht nur die Aufgabe einer Montagehilfe, nämlich einen Anschlag für den Winkelring 11 zu bilden, so dass die Dichtung 5 bezogen auf das Wälzlager 1 innerhalb der Dichtungsanordnung stets korrekt positioniert ist. Außerdem bildet der Axialanschlag 15 mit seiner im Vergleich zur Dicke 16 des Axialflanschs 12 größeren radialen Tiefe 17 einen zusätzlichen Schmutzfang, durch den noch besser verhindert wird, dass Verunreinigungen und/ oder Feuchtigkeit zu den Wälzkörpern 4 vordringen. Der Axialflansch 15 wird radial innen des Axialflanschs 12 durch den Dichtbereich 8 statisch abgedichtet.

Der Dichtring 6 und der Winkelring 11 bilden die vormontierte Einheit 18, und der Dichtring 6 und der Winkelring 11 sind einander ungehaftet und kraftschlüssig zugeordnet. Die axiale Beweglichkeit des Dichtrings 6 ist durch den Radialflansch 13 und den Axialanschlag 15 begrenzt.

Um sicherzustellen, dass die Wälzkörper 4 und der Dichtring 6 während der bestimmungsgemäßen Verwendung der Dichtungsanordnung stets ohne Kontakt zueinander sind, ist die Dichtungsanordnung derart ausgebildet, dass die Wälzkörper 4 auf der der Dichtung 5 axial zugewandten Seite in der ersten gedachten Radialebene 19 angeordnet sind und der Axialanschlag 12 und die den Wälzkörpern 4 axial zugewandte Stirnseite des Dichtrings 6 in der zweiten gedachten Radialebene 20, wobei sich die beiden Radialebenen 19, 20 mit einem ersten axialen Abstand 21 benachbart zugeordnet sind.

Ein weiter verbesserter Schutz des Dichtrings 6, insbesondere der Dichtlippe 7, wird dadurch erreicht, dass der Protektorring 22 einen Bestandteil der Dichtungsanordnung bildet. Der Protektorring 22 ist der Dichtlippe 7, axial in Richtung der Beaufschlagung der Dichtungsanordnung mit Verunreinigungen und/ oder Feuchtigkeit betrachtet, funktionstechnisch vorgeschaltet. Der Protektorring 22 ist am Innenring 2 festgelegt und überdeckt die axial in Richtung Protektorring 22 vorgewölbte Dichtlippe 7 und deren Lauffläche 23 auf dem Innenring 2 in radialer Richtung.

Der radiale Überstand, mit dem der Protektorring 22 den Innenring 2 in radialer Richtung überragt, entspricht im Wesentlichen der radialen Dicke der Dichtlippe 7.

Die gezeigte Dichtungsanordnung weist ausgezeichnete Gebrauchseigenschaften während einer langen Gebrauchsdauer auf, hauptsächlich dadurch, dass die dynamisch beanspruchte Dichtlippe 7 und der statisch beanspruchte Dichtbereich 8 durch den Protektorring 22 und den Winkelring 11, der mit dem Axialanschlag 15 zusammenwirkt, geschützt sind. Dadurch ist gleichermaßen auch das Wälzlager 1 geschützt. Außerdem weist die Dichtungsanordnung einen teilearmen und einfachen Aufbau auf und ist kostengünstig herstellbar.

Die gezeigte Ausschnittsvergrößerung ist mit Bezugszeichen 25 versehen.

## Patentansprüche

1. Dichtungsanordnung, umfassend ein Wälzlager (1) mit einem Innenring (2), einem Außenring (3) und Wälzkörpern (4), die zwischen dem Innenring (2) und dem Außenring (3) angeordnet sind und eine Dichtung (5), umfassend einen Dichtring (6) aus einem Dichtungswerkstoff, mit einer dynamisch beanspruchten Dichtlippe (7) und einem statisch beanspruchten Dichtbereich (8), der eine Dichtfläche (9) auf der der Dichtlippe (7) radial abgewandten Seite aufweist, wobei sich die Dichtlippe (7) und der Dichtbereich (8) mit radialem Abstand benachbart zugeordnet sind und einen Anschlagring (10) aus einem zähharten Werkstoff, der die Dichtfläche (9) anliegend und dichtend berührt, wobei der Anschlagring (10) als Winkelring (11) mit einem Axialflansch (12) und einem Radialflansch (13) ausgebildet ist, wobei der Axialflansch (12) am Außen- (3) oder Innenring (2) festgelegt ist und auf der dem Radialflansch (13) axial abgewandten Seite eine Stirnseite (14) aufweist, die einen Axialanschlag (15) des Außen- (3) oder Innenrings (2) anliegend berührt.

2. Dichtungsanordnung nach Anspruch 1, **dadurch gekennzeichnet, dass** der Radialflansch (13) und der Axialanschlag (12) den Dichtbereich (8), im Querschnitt der Dichtungsanordnung betrachtet, klammerförmig umschließen.

3. Dichtungsanordnung nach einem der Ansprüche 1 oder 2, **dadurch gekennzeichnet, dass** der Axialflansch (12) eine radiale Dicke (16) und der Axialanschlag (15) eine radiale Tiefe (17) aufweisen und dass das Verhältnis aus radialer Tiefe (17) und radialer Dicke (16) 1,5 bis 2,5 beträgt.

4. Dichtungsanordnung nach einem der Ansprüche 1 bis 3, **dadurch gekennzeichnet, dass** der Dichtring (6) und der Winkelring (11) eine vormontierte Einheit (18) bilden.

5. Dichtungsanordnung nach Anspruch 4, **dadurch gekennzeichnet, dass** der Dichtring (6) und der Winkelring (11) einander ungehaftet und kraftschlüssig zugeordnet sind.

6. Dichtungsanordnung nach Anspruch 1, **dadurch gekennzeichnet, dass** die Wälzkörper (4) auf der der Dichtung (5) axial zugewandten Seite in einer ersten gedachten Radialebene (19) angeordnet sind und der Axialanschlag (12) in einer zweiten gedachten Radialebene (20) und dass sich die Radialebenen (19, 20) mit einem ersten axialen Abstand (21) benachbart zugeordnet sind.

7. Dichtungsanordnung nach Anspruch 1, **dadurch gekennzeichnet, dass** die Dichtung (5) einen Protektorring (22) umfasst, der am Innen- (2) oder Außenring (3) festgelegt ist, dass die Dichtlippe (7) axial in Richtung Protektorring (22) vorgewölbt ist und dass der Protektorring (22) die Dichtlippe (7) und ihre entsprechende Lauffläche am Innen- (2) oder Außenring (3) in radialer Richtung überdeckt.

8. Dichtungsanordnung nach Anspruch 7, **dadurch gekennzeichnet, dass** der Protektorring (22) der Dichtlippe (7) mit einem zweiten axialen Abstand (24) benachbart zugeordnet ist.

9. Verwendung einer Dichtungsanordnung nach einem der Ansprüche 1 bis 8 in einem Elektromotor.
